# DEMANDE DE BREVET EUROPEEN

(11) **EP 0 555 144 A1**
(43) Date de publication de la demande: **11.08.1993**
(21) Numéro de dépôt: 93400265.0
(22) Date de dépôt: 03.02.1993
(51) Int. Cl.: H02H 9/00, F03B 13/06

(54) **Station de pompage**

(30) Priorité: 07.02.1992 FR 9201403; 07.08.1992 FR 9209836; 14.12.1992 FR 9215018
(71) Demandeur: GEC ALSTHOM SA, F-75116 Paris (FR)
(72) Inventeur: Thuries, Edmond, F-69330 Meyzieu (FR); Motz, Martin, F-69100 Villeurbanne (FR)
(74) Mandataire: Fournier, Michel

(57) **Abrégé**

Station de pompage fournissant de l'énergie hydraulique à un réseau (R) ou élevant de l'eau d'un niveau bas à un niveau haut, et comprenant notamment un transformateur (THT/MT) entre un alternateur et le réseau, avec interposition d'un disjoncteur (DTHT), caractérisé en ce qu'il comprend des moyens pour limiter le courant d'appel dans le transformateur. Ces moyens comprennent une résistance (RS) de 500 à 100.000 ohms insérée à la fermeture du disjoncteur pendant une durée comprise entre 15 et 19 millisecondes et/ou des moyens (MY) pour que le disjoncteur ne se ferme sur le transformateur à vide qu'à un instant séparé au maximum de 1,2 millisecondes d'un extrémum de la tension du réseau (R).

## Description

La présente invention concerne une station de pompage qui fonctionne tantôt en producteur d'énergie électrique, tantôt en consommateur d'énergie. Dans le premier cas, de l'eau, tombant d'un niveau supérieur à un niveau inférieur, entraîne une turbine hydraulique accouplée à un alternateur qui fournit de l'énergie à un réseau électrique à travers un transformateur très haute tension/moyenne tension (désigné dans la suite en abrégé par transformateur THT/MT), fonctionnant en élévateur de tension. Dans le second cas, le réseau fournit à un moteur, à travers le même transformateur de tension, de l'énergie électrique, le moteur entraînant une pompe qui élève l'eau au niveau supérieur. L'excitation des machines est réalisé au moyen de générateurs statiques à thyristors alimentés par des transformateurs moyenne ten- sion/basse tension (en abrégé MT/BT), connectés au transformateur THT/MT et pour cette raison appelés transformateurs de soutirage. La station de pompage est séparée du réseau par un disjoncteur.

Avant tout démarrage d'une machine, moteur ou alternateur selon le mode d'exploitation choisi, il est nécessaire de mettre sous tension le transformateur THT/MT pour que celui-ci soit en mesure d'alimenter le transformateur de soutirage correspondant à la machine utilisée.

En raison de la faible puissance du transformateur de soutirage, tout se passe comme si le transformateur THT/MT était mis sous tension à vide.

Or on sait que la mise sous tension à vide d'un transformateur donne naissance à un courant d'appel dont la valeur crête dépend de la valeur de la tension au moment de l'enclenchement; si l'enclenchement a lieu lorsque la tension alternative passe par un extrémum., le courant d'appel est faible; lorsque la mise sous tension a lieu lorsque la tension du réseau est au voisinage de zéro, le courant d'appel peut attein- dre des valeurs importantes, de l'ordre de 5 à 10 fois le courant nominal du transformateur. Cette surcharge a pour effet de créer des fatigues dans le transformateur en raison des efforts électromagnétiques engendrés ainsi qu'unaccroissement du veillissement des isolants. Ce vieillissement des isolants peut être encore accéléré si des phénomènes de ferro- résonance parallèle prennent naissance.

Or, un transformateur d'une station de pompage peut être sollicité plusieurs fois par jour, de sorte qu'à moins d'être surdimensionné de manière très importante, il est sujet à une dégradation rapide.

Un but de l'invention est d'équiper la station de pompage de moyens pour limiter le courant d'appel dans le transformateur au moment de l'enclenchement.

Il a été proposé, notamment dans la revue Electra n°94, mai 1984 "Les problèmes liés aux circuits magnétiques de transformateurs et des bobines de réactance", par H. KAN, de munir le disjoncteur d'un moyen pour insérer en parallèle sur ses contacts, à la fermeture, pendant 25 milllisecondes, une résistance de 4300 ohms, ou, pendant au moins 13 millisecondes, une résistance comprise entre 3000 et 7000 ohms.

Le Demandeur a constaté que la durée d'insertion est un paramètre essentiel pour la mise en oeuvre de cette technique. Si la durée d'insertion est trop courte, l'écrêtage du courant est insuffisant; si la durée est trop longue, l'énergie absorbée par la résistance est trop importante et peut conduire à sa destruction rapide.

Selon une caractéristique de l'invention, la résistance d'insertion a une valeur comprise entre 500 et 100.000 ohms et la durée d'insertion est comprise entre 15 et 19 millisecondes.

Une autre manière de limiter le courant d'appel dans une station de pompage est fondée sur l'observation que le courant d'appel est d'autant plus faible que l'enclenchement du transformateur est effectué à un instant où la tension du réseau est plus proche d'un extrémum.

Selon l'invention, la station de pompage comporte un moyen agissant sur la commande du disjoncteur pour n'autoriser sa fermeture sur le transformateur à vide qu'à un instant séparé au maximum de 1,2 millisecondes de part et d'autre de l'instant de passage par un extrémum de le tension du réseau. Cette mesure peut être utilisée seule ou en combinaison avec la précédente.

Grâce à cette mesure, l'intensité dans le transformateur ne peut dépasser deux fois l'intensité nominale dans le transformateur, comme l'ont montré des calculs effectués par le Demandeur.

Dans l'application de cette solution, l'onde de tension appliquée au transformateur est maximale. Il apparaît des oscillations à front raide dans le poste blindé, de fréquence de quelques MHz et d'amplitude importante, ce qui est nuisible au transformateur. Pour éviter cet inconvénient, et selon une caractéristique de l'invention, chacun des conducteurs de phase reliant le transformateur au disjoncteur est mis à la terre à travers un circuit comprenant un condensateur et une résistance en série. Dans le cas d'une technique blindée dans laquelle le condensateur et la résistance sont placés dans une tube métallique, la résistance est égale ::: l'impédance caractéristique du dit tube. La valeur de ..-a capacité du condensateur est au moins égale à 2 nanoFarads.

L'invention a pour objet une station de pompage fonctionnant tantôt en producteur d'énergie par l'action d'une turbine entraînée par une chute d'eau d'un niveau supérieur à un niveau inférieur, ladite turbine étant couplée à un alternateur relié à un réseau électrique à travers un transformateur très haute tension/moyenne tension en série avec un disjoncteur à haute tension, tantôt en consommateur d'énergie en élevant de l'eau du niveau inférieur au niveau supérieur au moyen d'une pompe entraînée par un moteur électrique alimenté par ledit réseau à travers ledit transformateur, ledit disjoncteur à haute tension étant disposé en aval du transformateur et étant équipé d'un dispositif d'insertion à la fermeture d'une résistance, caractérisée en ce que la résistance a une valeur comprise entre 500 et 100.000 ohms et que la durée d'insertion de ladite résistance à la fermeture du disjoncteur est comprise entre 15 et 19 millisecondes.

L'invention a également pour objet une station de pompage fonctionnant tantôt en producteur d'énergie par l'action d'une turbine entraînée par une chute d'eau d'un niveau supérieur à un niveau inférieur, ladite turbine étant couplée à un alternateur relié à un réseau électrique à travers un transformateur très haute tension/moyenne tension en série avec un disjoncteur à haute tension, tantôt en consommateur d'énergie en élevant de l'eau du niveau inférieur au niveau supérieur au moyen d'une pompe entraînée par un moteur électrique alimenté par ledit réseau à travers ledit transformateur, ledit disjoncteurà haute tension étant disposé en aval du transformateur et étant équipé d'un dispositif d'insertion à la fermeture d'une résistance, caractérisée en ce qu'elle comporte un moyen agissant sur la commande du disjoncteur pour n'autoriser sa fermeture qu'à un instant séparé au maximum de 1,2 millisecondes de part et d'autre de l'instant de passage par un extrémum de la tension du réseau.

L'invention a également pour objet une station de pompage fonctionnant tantôt en producteur d'énergie par l'action d'une turbine entraînée par une chute d'eau d'un niveau supérieur à un niveau inférieur, ladite turbine étant couplée à un alternateur relié à un réseau électrique à travers un transformateur très haute tension/moyenne tension en série avec un disjoncteur à haute tension, tantôt en consommateur d'énergie en élevant de l'eau du niveau inférieur au niveau supérieur au moyen d'une pompe entraînée par un moteur électrique alimenté par ledit réseau à travers ledit transformateur, ledit disjoncteurà haute tension étant disposé en aval du transformateur et étant équipé d'un dispositif d'insertion à la fermeture d'une résistance, caractérisée en ce que la résistance de fermeture a une valeur comprise entre 500 et 100.000 ohms et que la durée d'insertion de ladite résistance à la fermeture du disjoncteur est comprise entre 15 et 19 millisecondes et qu'elle comporte un moyen agissant sur la commande du disjoncteur pour n'autoriser sa fermeture qu'à un instant séparé au maximum de 1,2 millisecondes de part et d'autre de l'instant de passage par un extrémum de !a tension du réseau. chacun des conducteurs de phase reliant le transformateur au disjoncteur est mis à la terre à travers un circuit comprenant un condensateur et une résistance en série.

Avantageusement, chacun des conducteurs de phase reliant le transformateur au disjoncteur est mis à la terre à travers un circuit comprenant un condensateur et une résistance en série.

La valeur de la capacité du condensateur est au moins égale à 2 nanoFarads.

Dans un mode particulier de réalisation, le condensateur et la résistance en série avec le condensateur sont des éléments cylindriques disposés coaxialement à l'intérieur d'un tube métallique à la terre rempli de gaz à bonnes propriétés diélectriques.

La résistance présente alors une valeur voisine de l'impédance caractéristique dudit tube.

L'invention est précisée par la description donnée ci-après en référence au dessin annexé dans lequel:
- la figure 1 est une vue schématique d'une station de pompage,
- la figure 2 est un diagramme montrant l'allure du courant d'appel dans le cas d'une insertion de 13 millisecondes d'une résistance de 100.000 ohms, pour diverses valeurs de la phase de la tension à la fermeture du disjoncteur,
- la figure 3 est un diagramme analogue dans le cas d'une insertion de 17 millisecondes,
- la figure 4 est un schéma du dispositif de commande du disjoncteur,
- la figure 5 est un diagramme représentant le courant d'appel dans le transformateur lorsque l'enclenchement du disjoncteur a lieu au zéro de la tension du réseau,
- la figure 6 est un diagramme représentant le courant d'appel dans le transformateur lorsque l'enclenchement du du disjoncteur a lieu à un instant séparé de plus ou moins 1,2 millisecondes d'un extrémum de la tension du réseau,
- la figure 7 est un schéma illustrant l'utilisation d'un circuit à résistance condensateur en série,
- la figure 8 est une vue schématique en élévation d'une partie d'une station de pompage réalisée en technique blindée,
- la figure 9 montre en coupe axiale un circuit comprenant un condensateur et une résistance placés dans un tube métallique,
- la figure 10 est un diagramme de la tension aux bornes du transformateur d'une station ce pompage en l'absence du circuit à résistance et condensateur,
- la figure 11 est un diagramme de la tension aux bornes du même transformateur lorsque la station de pompage est munie du circuit à résistance et capacité.

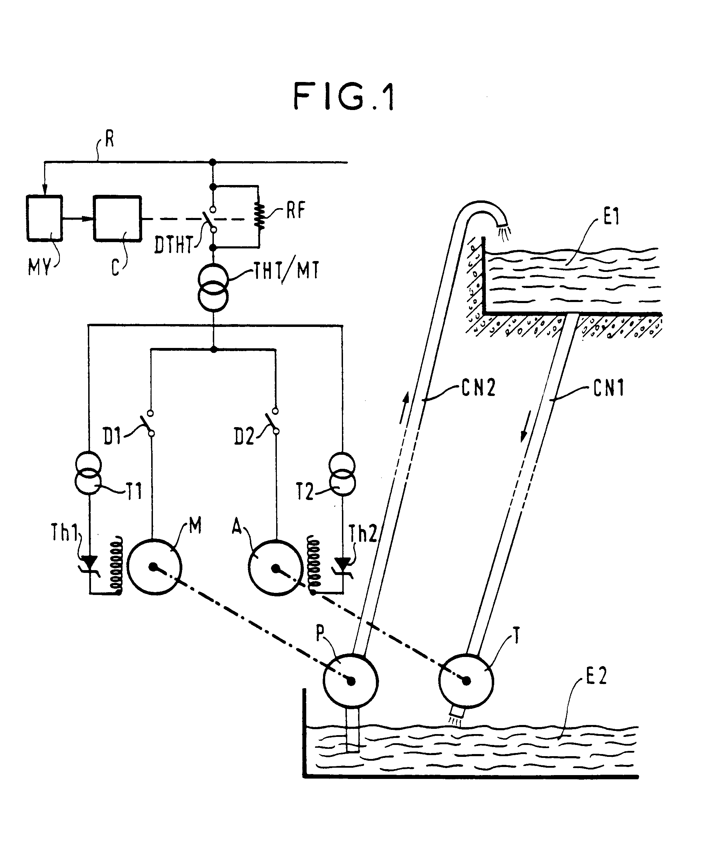

Dans la figure 1, la référence E1 désigne un réservoir d'eau à un niveau supérieur alimentant par une conduite CN1 une turbine hydraulique T placée près d'un réservoir E2 à un niveau inférieur. La turbine est couplée à un alternateur débitant sur un réseau R par l'intermédiaire d'un transformateur très thaute tension/moyenne tension THT/MT.

Une pompe P, entraînée par un moteur M, permet de remonter l'eau du niveau inférieur au niveau supérieur; le moteur est alimenté par le réseau à travers le transformateur THT/MT. Des disjoncteurs D1 et D2 permettent d'isoler les appareils et de permettre les commutations d'un type de fonctionnement à l'autre.Un disjoncteur DTHT isole la station du réseau haute tension. On a désigné par T1 et T2 des transformateurs de soutirage pour l'alimentation de thyristors destinés à l'excitation du moteur et de l'alternateur.

Comme il a été déjà expliqué, la commutation d'un type de fonctionnement à l'autre nécessite l'ouverture du disjoncteur DTHT, de sorte que le transformateur THT/MT est soumis fréquemment à une mise sous tension à vide, et, par suite, à un risque de surintensité.

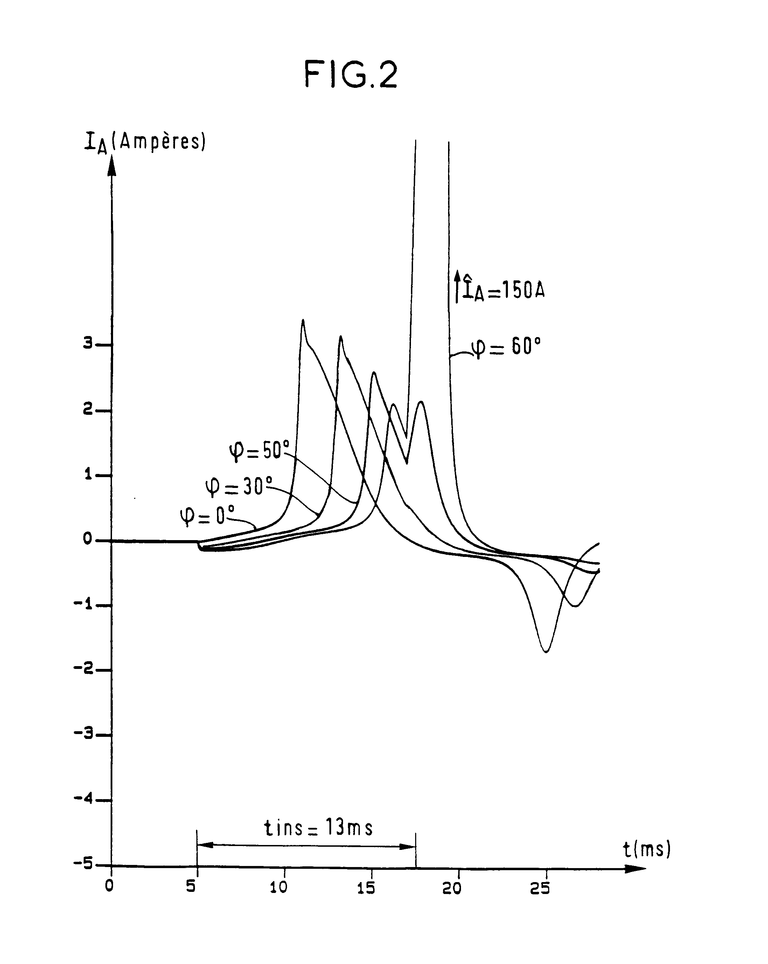

Pour limiter la surintensité, il est connu d'utiliser, comme le montre la figure 2, une résistance d'enclenchement aux bornes du disjoncteur DTHT pendant une durée de 13 millisecondes. On constate que pour certaines valeur de la phase Φ de la tension à la fermeture du disjoncteur, le courant d'appel IA atteint une valeur crête ÎA innaceptable. Comme on le voit dans le diagramme, dès que Φ atteint 60°, le courant ÎA atteint 150 A; il a été trouvé les valeurs suivantes de ÎA pour des phases supérieures:
Φ=65° ÎA = 300A
Φ = 70° ÎA = 400A
Φ= 70° ÎA = 130A

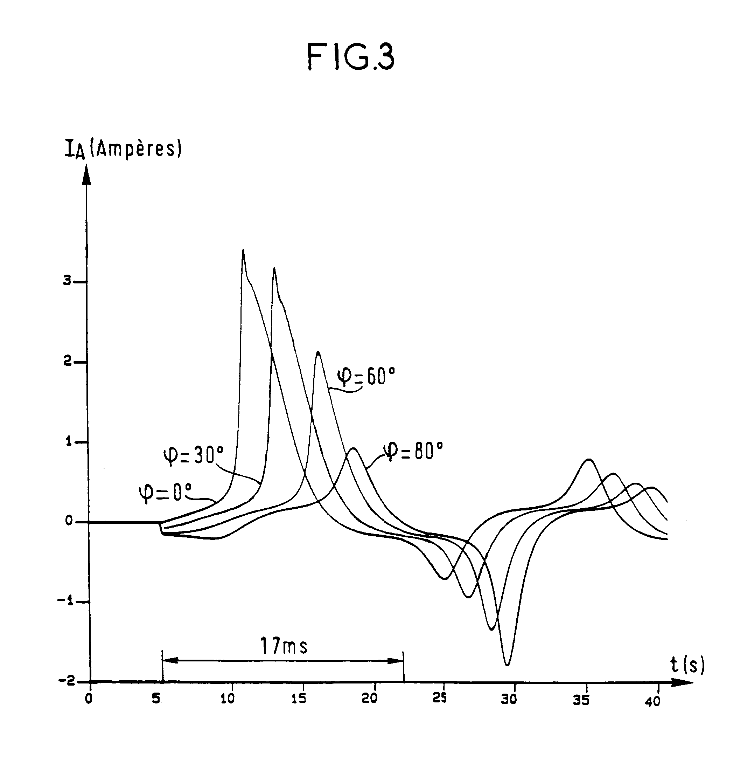

Selon l'invention, et comme il est illustré dans le diagramme de la figure 3, une durée d'insertion de 17 millisecondes résoud parfaitement le problème puisque sur toute l'étendue de valeurs possibles de phase, le courant de crête ÎA n'excède pas quelques ampères. L'énergie absorbée par la résistance de fermeture reste faible, de l'ordre de quelques centaines de Joules. En pratique, la durée d'insertion est choisie entre 15 et 19 millisecondes.

La mise en oeuvre de la technique d'insertion est bien connue. On pourra se reporter par exemple à l'enseignement du brevet français n° 79 05 478 déposé le 2 mars 1978 au nom de DELLE-ALSTHOM. La résistance de fermeture est soit à l'intérieur de la chambre de coupure du disjoncteur DTDH, soit dans une colonne séparée.

Un autre moyen pour limiter les courants d'appel dans le transformateur, et qui peut être employé soit seul, soit conjugué avec le moyen précédent, est équiper la station de pompage d'un moyen MY agissant sur la commande C du disjoncteur pour n'autoriser sa fermeture q'uà un instant séparé au maximum de 1,2 millisecondes de part et d'autre de l'instant de passage par un extrémum de la tension du réseau.

De la sorte, l'intensité dans le transformateur ne peut dépasser deux fois l'intensité nominale In, comme l'ont montrée des calculs de simulation effectués par le Demandeur.

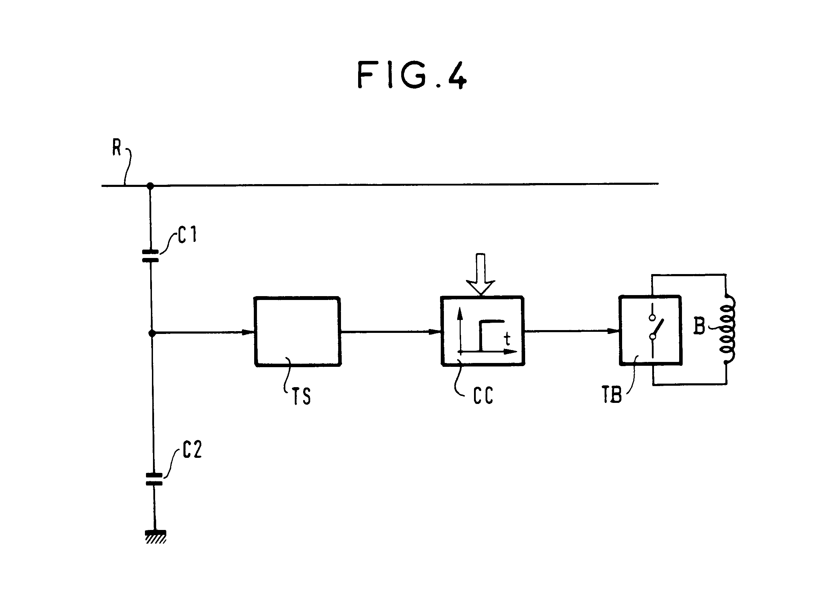

La figure 4 illustre un exemple de réalisation du moyen précité: le moyen MY comprend un diviseur capacitif C1-C2 fournissant, à un déphasage de 90 degrés près, une image de la tension du réseau.

Cette tension image est adressée à un détecteur de passage par zéro TS, tel qu'un trigger de Schmidt, dont la sortie est reliée à un compteur CC (par exemple un chronomètre en millisecondes). Le compteur est ajustable et est réglé pour fournir en sortie une impulsion de commande après une temporisation réglable qui tient compte:
a) du temps de fonctionnement du disjoncteur ( temps qui s'écoule entre l'instant où l'ordre de fermeture est donné et l'instant où les contacts du disjoncteur se touchent: de l'ordre de 50 à 60 millisecondes selon le type d'appareil),
b) de la dispersion mécanique, de l'ordre de la milliseconde,
c) du temps de préamorçage, de 1 à 2 millisecondes selon le type de disjoncteur.

A la sortie du compteur, une impulsion commande le fonctionnement de l'interrupteur TB en série avec la bobine de déclenchement B du disjoncteur.

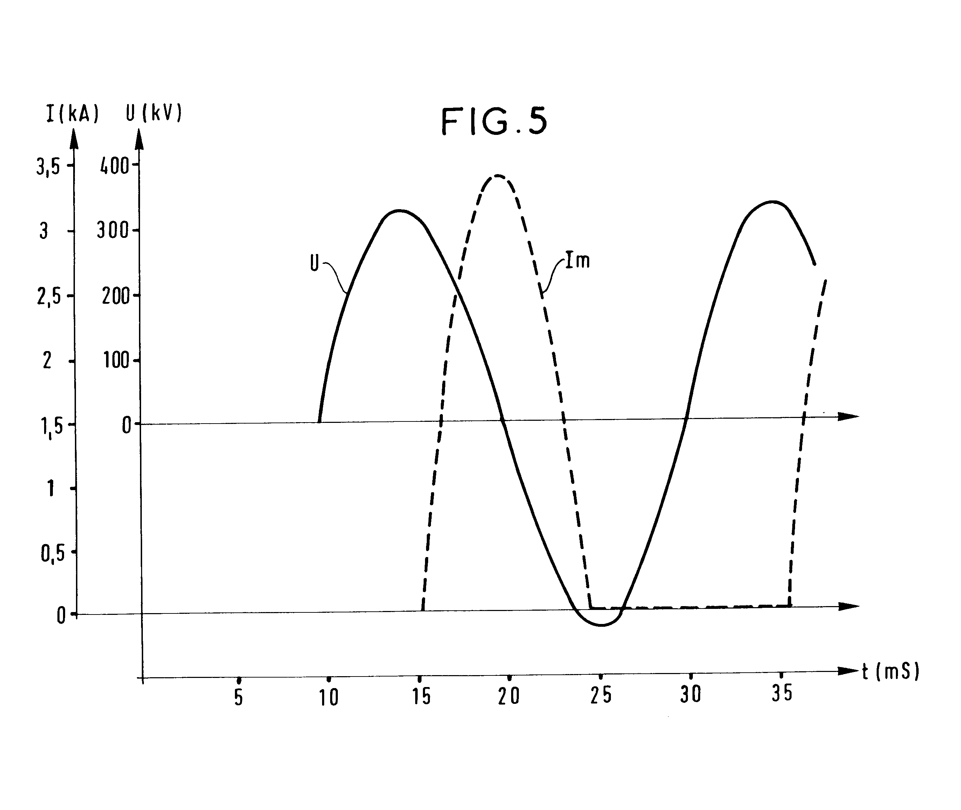

Le diagramme de la figure 5 montre que si l'on ferme le disjoncteur lorsque la tension U du réseau est à zéro, le courant d'appel lm atteint une valeur égale à six fois l'intensité nominale In (500 A dans l'exemple choisi) du transformateur.

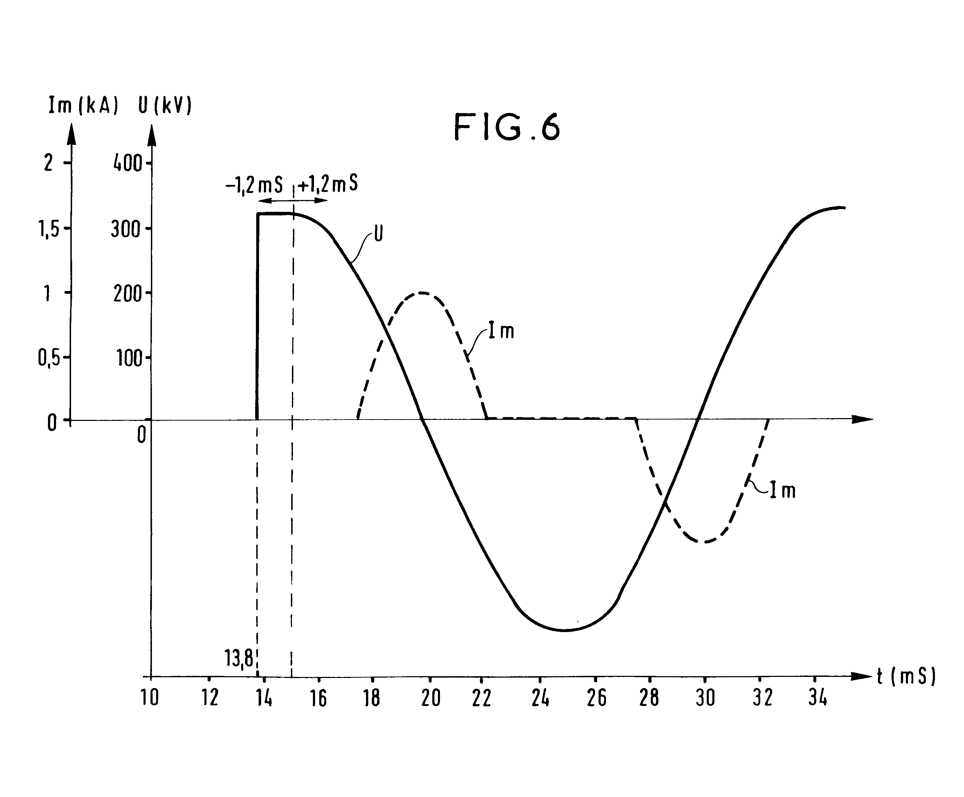

Le diagramme de la figure 6 montre qu'en fermant le disjoncteur au plus tard 1,2 millisecondes avant ou après un extrémum de la tension U du réseau, la crête du courant d'appel lm ne dépasse pas 2 fois le courant nominal du transformateur, ce qui est parfaitement tolérable pour celui-ci, même lorsqu'il est appelé à fonctionner plusieurs fois par jour.

Cette solution peut présenter un risque car l'onde de tension maximale est appliquée au transformateur. Il apparaît des oscillations de tension à front raide dans les éléments de la station, de fréquence de quelques MHz et d'amplitude importante, ce qui est nuisible au transformateur.

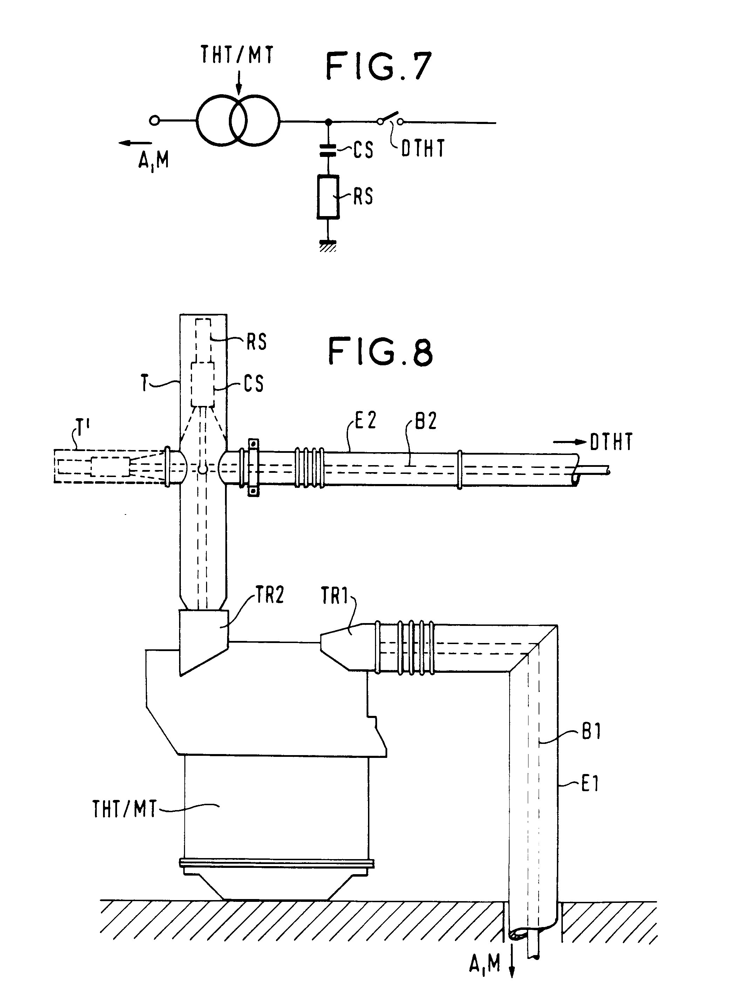

Pour éviter cet inconvénient, chacun des conducteurs de phase reliant le transformateur THT/MT au disjoncteur DTDH est mis à la terre, comme le montre la figure 7, à travers un circuit comprenant un condensateur CS et une résistance en série RS.

On va maintenant décrire un exemple de mise en oeuvre de ce circuit dans une station de pompge réalisée en technique blindée, c'est-à-dire du type à enveloppe métallique à la terre. Cet exemple n'est pas limitatif.

La figure 8 montre le transformateur THT/MT représenté en élévation; il est relié à l'alternateur, côté moyenne tension, par une traversée TRI reliée à un premier jeu de barres B1 placé dans une enveloppe métallique E1 à la terre remplie de gaz à bonnes propriétés diélectriques tel que l'hexafluorure de soufre SF6.

Le transformateur THT/MT est relié au disjoncteur, côté très haute tension, par une traversée TR2 reliée à un second jeu de barres B2 placé dans une enveloppe métallique E2 à la terre remplie de SF6. L'enveloppe E2 forme un coude pour permettre au jeu de barres B2 de s'étendre horizontalement avant de rejoindre le disjoncteur DTHT.

En variante, le transformateur pourrait. être muni de traversées conventiionnelles.

Le circuit de l'invention comprenant, pour chacune des phases de l'installation, une résistance RS en série avec un condensateur CS est placé dans un tube T disposé verticalement dans le prologement de la traversée TR2 ou dans un tube T'disposé horizontalement.

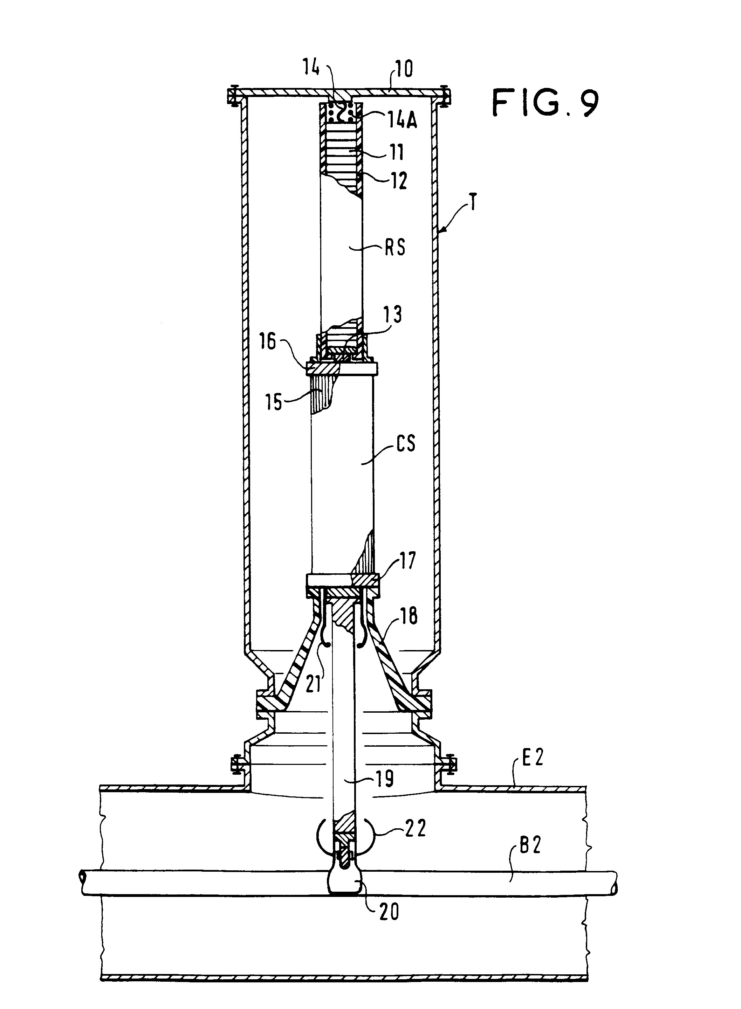

La figure 9 montre une vue en coupe axiale du tube T contenant la résistance RS et le condensateur CS. Le tube T est rempli de gaz diélectrique, de préférence de même nature et à la meme pression que celui que l'enveloppe E2 à laquelle il est fixé; le tube T est fermé par un couvercle 10 étanche au gaz. La résistance RS est préférentiellement constituée d'un empilement de pastilles 11 placées dans une enveloppe isolante 12; à une extrémité de l'enveloppe est fixée une pièce métallique 13 en contact d'une part avec l'empilement de pastilles résistives et d'autre part avec une borne 16 du condensateur CS; le contact électrique de l'empilement de pastilles 11 avec le couvercle 10 est assuré par une tresse métallique 14 associée à un ressort 15.

Le condensateur CS est par exemple constitué d'un enroulement surelle-même d'une feuille de plastique métallisée 15; en variante, le condensateur est un condensateur céramique. Le condensateur porte deux bornes métalliques 16 et 17 ; la borne 16 est en contact avec la résistance RS, comme il a été déjà dit; la borne 17 est en contact, d'une part avec un cône isolant qui assure le maintien du circuit CS-RS à l'intérieur du tube T, d'autre part avec une barre de liaison 19 munie d'une mâchoire 20 assurant le contact avec la barres B2. Des pare-effluves 21 et 22 complètent le dispositif.

Dans ce mode de réalisation, on utilise une résistance dont la valeur ohmique est égale à l'impédance caractéristique du tube T; à titre d'exemple, dans une installation comprenant un transformateur 15kV/420kV, le tube T a un diamètre de de l'ordre de 750 mm et une hauteur voisine de 2500mm; l'impédance caractéristique du tube est de l'ordre de 70Q pour un poste blindé; c'est la valeur qu'on choisira pour la résistance RS.

On notera que la disposition relative de la résistance RS et du condensateur CS à l'intérieur du tube pourrait être inversée, la résistance se trouvant alors reliée à la barre 19 et le condensateur au couvercle 10.

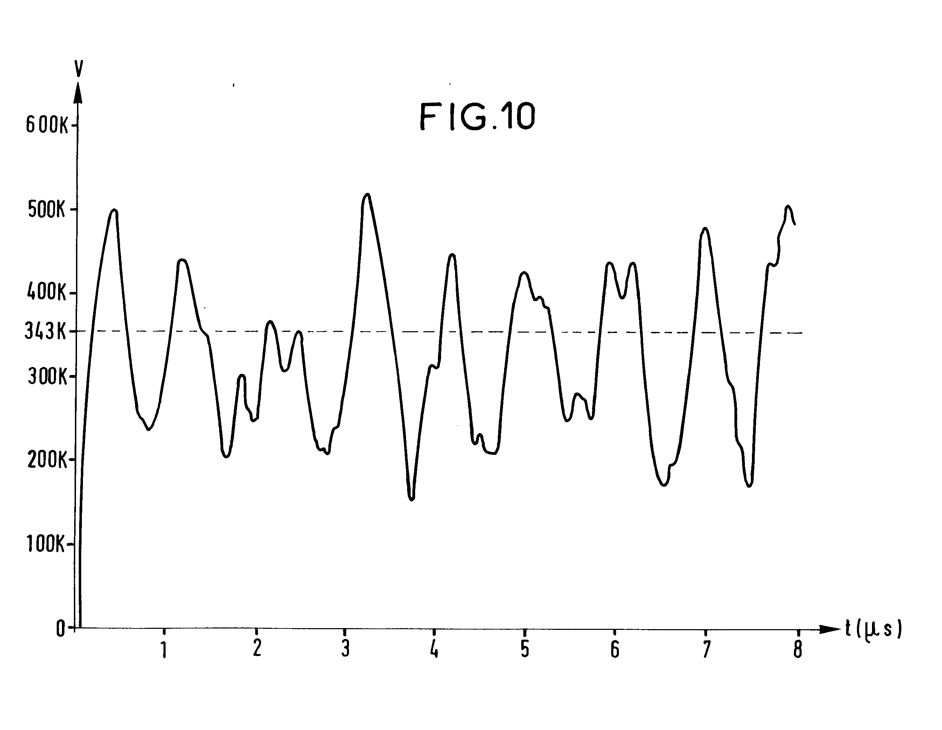

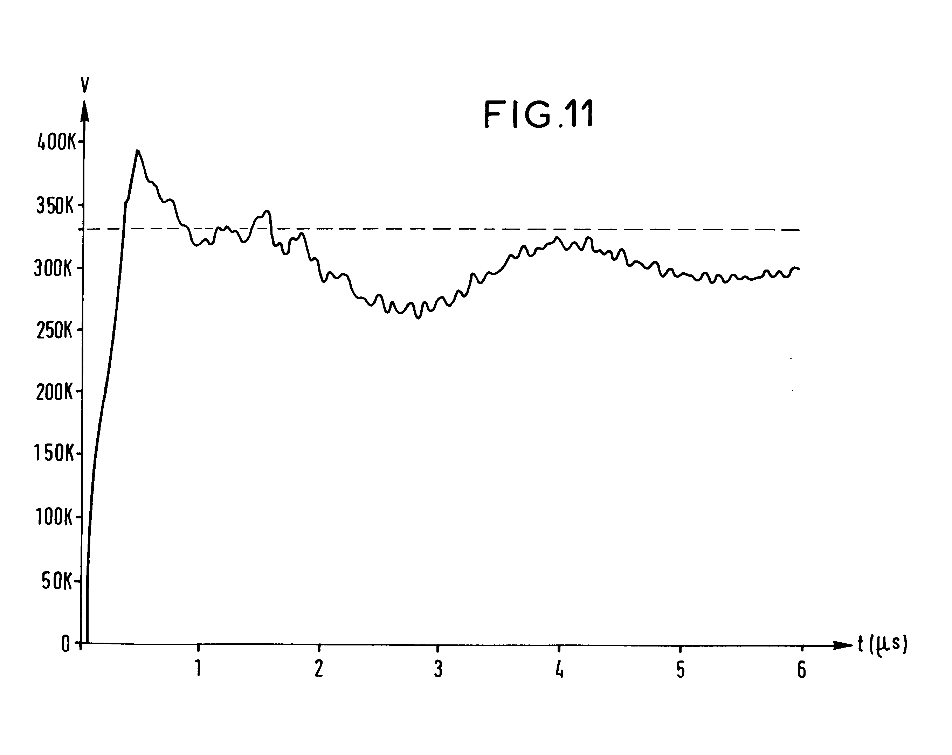

Les diagrammes des figures 10 et 11 illustrent l'efficacité de l'invention.

La figure 10 représente les variations en fonction du temps de la tension aux bornes de l'enroulement haute tension V d'un transformateur à 420 kV (dont la valeur de tension crête est 343 kV), lorsque la tension maximale Un du réseau est appliquée sans le circuit RS-CS de l'invention. On constate des oscillations à front raide d'amplitude atteignant 150% de la valeur crête.

Dans le diagramme de la figure 11, qui illustre la mise sous tension du même transformateur, mais dans une station équipée du circuit RS-CS de l'invention, on constate que les oscillations sont très amorties et que leur amplitude est notablement diminuée.

L'invention n'est pas limitée au mode de réalisation décrit qui n'a été donné qu'à titre d'exemple.

L'invention s'applique aux stations de pompage.

## Revendications

1/ Station de pompage fonctionnant tantôt en producteur d'énergie par l'action d'une turbine entraînée par une chute d'eau d'un niveau supérieurà un niveau inférieur, ladite turbine étant couplée à un alternateur relié à un réseau électrique à travers un transformateur très haute tension/moyenne tension en série avec un disjoncteur à haute tension, tantôt en consommateur d'énergie en élevant de l'eau du niveau inférieur au niveau supérieur au moyen d'une pompe entraînée par un moteur électrique alimenté par ledit réseau à travers ledit transformateur, ledit disjoncteur à haute tension étant disposé en aval du transformateur et étant équipé d'un dispositif d'insertion à la fermeture d'une résistance, caractérisée en ce que la résistance (RF) a une valeur comprise entre 500 et 100.000 ohms et que la durée d'insertion de ladite résistance (RF) à la fermeture du disjoncteur (DTHT) est comprise entre 15 et 19 millisecondes.

2/ Station de pompage fonctionnant tantôt en producteur d'énergie par l'action d'une turbine entraînée par une chute d'eau d'un niveau supérieurà un niveau inférieur, ladite turbine étant couplée à un alternateur relié à un réseau électrique à travers un transformateur très haute tension/moyenne tension en série avec un disjoncteur à haute tension, tantôt en consommateur d'énergie en élevant de l'eau du niveau inférieur au niveau supérieur au moyen d'une pompe entraînée par un moteur électrique alimenté par ledit réseau à travers ledit transformateur, ledit disjoncteur à haute tension étant disposé en aval du transformateur et étant équipé d'un dispositif d'insertion à la fermeture d'une résistance, caractérisée en ce qu'elle comporte un moyen (MY) agissant sur la commande (C) du disjoncteur (DTHT) pour n'autoriser sa fermeture qu'à un instant séparé au maximum de 1,2 millisecondes de part et d'autre de l'instant de passage par un extrémum de la tension du réseau (R).

3/ Station de pompage fonctionnant tantôt en producteur d'énergie par l'action d'une turbine entraînée par une chute d'eau d'un niveau supérieur à un niveau inférieur, ladite turbine étant couplée à un alternateur relié à un réseau électrique à travers un transformateur très haute tension/moyenne tension en série avec un disjoncteur à haute tension, tantôt en consommateur d'énergie en élevant de l'eau du niveau inférieur au niveau supérieur au moyen d'une pompe entraînée par un moteur électrique alimenté par ledit réseau à travers ledit transformateur, ledit disjoncteur à haute tension étant disposé en aval du transformateur et étant équipé d'un dispositif d'insertion à la fermeture d'une résistance, caractérisée en ce que la résistance (RF) a une valeur comprise entre 500 et 100.000 ohms et que la durée d'insertion de ladite résistance (RF) à la fermeture du disjoncteur (DTHT) est comprise entre 15 et 19 millisecondes et qu'elle comporte un moyen (MY) agissant sur la commande (C) du disjoncteur (DTHT) pour n'autoriser sa fermeture qu'à un instant séparé au maximum de 1,2 millisecondes de part et d'autre de l'instant de passage par un extrémum de la tension du réseau. chacun des conducteurs de phase reliant le transformateur (THT/MT) au disjoncteur (DTDH) est mis à la terre à travers un circuit comprenant un condensateur (CS) et une résistance (RS) en série.

4/ Station de pompage selon l'une des revendications 1 à 3, caractérisée en ce que chacun des conducteurs de phase reliant le transformateur (THT/MT) au disjoncteur (DTDH) est mis à la terre à travers un circuit comprenant un condensateur (CS) et une résistance (RS) en série.

5/ Station de pompage selon la revendication 4, caractérisée en ce que la valeur de la capacité du condensateur (CS) est au moins égale à 2 nanoFarads.

6/ Station de pompage selon l'une des revendication 4 et 5, caractérisée en ce que le condensateur (CS) et la résistance (RS) sont des éléments cylindriques disposés coaxialement à l'intérieur d'un tube métallique (T) à la terre rempli de gaz à bonnes propriétés diélectriques.

7/ Station de pompage selon la revendication 6, caractérisé en ce que la résistance (RS) présente une valeur voisine de l'impédance caractéristique dudit tube (T).

8/ Station de pompage selon l'une des revendications 2 à 7, caractérisée en ce le moyen agissant sur la commande du disjoncteur comprend un transformateur de tension (C1-C2) fournissant une image de la tension du réseau, un dispositif (TS) de détection de passage par zéro de la tension image, ledit dispositif de détection actionnant un chronomètre en millisecondes (CC) fournissant en sortie, après une temporisation réglable, une impulsion de commande de l'interrupteur (TB) en série avec la bobinne de commande du disjoncteur (DTHT).
